# EUROPEAN PATENT APPLICATION

(11) **EP 1 860 605 A1**
(43) Date of publication of application: **28.11.2007**
(21) Application number: 06712555.9
(22) Date of filing: 30.01.2006
(51) Int. Cl.: G06Q 20/00

(54) **ELECTRONIC MONEY SYSTEM, INFORMATION STORAGE MEDIUM, AND MOBILE TERMINAL DEVICE**

(30) Priority: 03.03.2005 JP 2005059063
(71) Applicant: Sharp Kabushiki Kaisha, Osaka-shi, Osaka 545-8522 (JP)
(72) Inventor: FUJIMOTO, Masao, Kitakatsuragi-gun, Nara 636-0022 (JP)
(74) Representative: Müller, Frithjof E.
(86) International application number: PCT/JP2006/301412
(87) International publication number: WO 2006/092918

(57) **Abstract**

In a mobile terminal device to be attached detachably with an information storage medium having an electronic money function, authentication is executed between the information storage medium and the mobile terminal device and, when the authentication is successfully completed, the electronic money function of the information storage medium is made executable.

The information storage medium 30 stores electronic money information and includes a nonvolatile memory 33 registered with at least one mobile terminal device, an interface 31 that connects to the mobile terminal device, and an electronic money controlling unit 32. The electronic money controlling unit 32 authenticates whether a mobile terminal device connected to the interface 31 is a mobile terminal device registered in the nonvolatile memory 33 and permits the mobile terminal device for which the authentication is successfully completed to make an access to electronic money information. The information storage medium 30 permits connection of an external antenna to transmit and receive the electronic money information when the mobile terminal device connected to the interface 31 is permitted to make an access to the electronic money information.

## Description

### TECHNICAL FIELD

The present invention relates to an electronic money system, an information storage medium, and a mobile terminal device, and more particularly to an electronic money system, an information storage medium, and a mobile terminal device that execute an electronic money function by being attached detachably with the information storage medium that stores electronic money information indicating a monetary value as electronic data.

### BACKGROUND OF THE INVENTION

Currently, a mobile-phone is commercially available that incorporates an IC chip (for example, a Felica (a registered trademark) chip) having an electronic money (for example, Edy (a registered trademark)) function. With such a mobile-phone, a user can utilize the electronic money function by making a contract with a service providing company that provides an electronic money service, and can utilize a point saving function by making contracts with stores such as a home appliances mass merchandiser markets. However, in the case where an IC chip is incorporated in such a mobile-phone, when the mobile-phone is changed using a SIM (Subscriber Identity Module) or a USIM (Universal Subscriber Identity Module) or when a mobile-phone is replaced by purchasing a new one, problems have been arisen that a complicated operation must be executed such as anyway moving data of electronic money and points accumulated in the mobile-phone into a server apparatus once and moving the data from the server apparatus into a mobile-phone after being replaced, and communication charge and handling charge are necessary.

A method has been proposed as a method to solve the above problems, according to which an IC chip is incorporated in a memory card and the memory card is attached to a mobile-phone and, thereby, an electronic function can be executed. For example, Patent Document 1 discloses a mobile terminal that is adapted to be able to be attached with a memory card incorporating an IC chip. This includes an IC card that is attached to the mobile communicating terminal and stores predetermined information, a card detecting unit that detects whether the IC card is attached to the mobile communicating terminal, and a controlling unit that controls operations of a mobile communicating terminal using information in the IC card.
Patent Document 1: Japanese Laid-Open Patent Publication No. 2002-135465

### DISCLOSURE OF THE INVENTION

### PROBLEMS THAT THE INVENTION IS TO SOLVE

However, in the case where the above memory-card type is employed, it is difficult for the user to know that the memory card is pulled out of the mobile-phone and, therefore, a problem has arisen easily that it is after a value and points registered as electronic money have been already all spent that the user finds that the telephone is stolen. This is also applies to the invention described in the above Patent Document 1.

The present invention has been made considering the above circumstances and the object thereof is to enable a mobile terminal device that can be attached detachably with an information storage medium having an electronic money function, to execute authentication between the information storage medium and the mobile terminal device itself and to execute the electronic money function of the information storage medium when the authentication is successfully completed.

### MEANS FOR SOLVING THE PROBLEMS

In order to solve the above problems, a first technical means of the present invention is an electronic money system that comprises an information storage medium having an electronic money function and a mobile terminal device attached detachably with the information storage medium, and in which the electronic money function is made executable by attaching the information storage medium to the mobile terminal device,
wherein the information storage medium or the mobile terminal device comprising a determining means that determines whether the electronic money function is executable based on specific information obtained from the mobile terminal device attached with the information storage medium; and a controlling means that makes the electronic money function executable or not executable based on the result of the determining means.

A second technical means of the present invention is the electronic money system of the first technical means, wherein
the information storage medium has a registering means that can register at least one mobile terminal device, and the determining means authenticates whether the mobile terminal device attached with the information storage medium is a mobile terminal device registered in the registering means based on the specific information and, when the authentication is successfully completed, determines the electronic money function to be executable.

A third technical means of the present invention is the electronic money system of the second technical means,
wherein the information storage medium has a plurality of electronic money functions, and the registering means can set therein with executable electronic money functions for each mobile terminal device.

A fourth technical means of the present invention is the electronic money system of the second technical means,
wherein the registering means additionally registers or enables to be deleted a mobile terminal device that enables electronic money functions to be executed when the determining means determines to be executable.

A fifth technical means of the present invention is the electronic money system of the first technical means,
wherein the controlling means permits the mobile terminal device to make an access to electronic money information when the determining means determines to be executable.

A sixth technical means of the present invention is the electronic money system of the first technical means,
wherein the mobile terminal device has an antenna to transmit and receive electronic money information externally, and the controlling means connects the information storage medium and the antenna when the determining means determines to be executable.

A seventh technical means of the present invention is the electronic money system of the first technical means, wherein the mobile terminal device has a displaying means, and the controlling means displays a screen on the displaying means, that prompts registration of electronic money functions when the determining means determines to be not executable.

An eighth technical means of the present invention is the electronic money system of the first technical means,
wherein the mobile terminal device has a displaying means, and the controlling means displays a screen on the displaying means, that shows that the balance of the electronic money is zero when the determining means determines to be not executable.

A ninth technical means of the present invention is an information storage medium that has an electronic money function and that enables the electronic money function by being attached to a mobile terminal device, wherein the information storage medium comprising a determining means that determines whether the electronic money function is executable based on specific information obtained from the mobile terminal device attached with the information storage medium; and a controlling means that enables or disables the electronic money function to be based on the result of the determining means.

A tenth technical means of the present invention is the information storage medium of the ninth technical means, comprising a registering means that can register at least one mobile terminal device, wherein the determining means authenticates whether the mobile terminal device attached with the information storage medium is a mobile terminal device registered in the registering means based on the specific information and, when the authentication is successfully completed, determines the electronic money function to be executable.

An eleventh technical means of the present invention is the information storage medium of the tenth technical means,
wherein the information storage medium has a plurality of electronic money functions and the registering means can set therein executable electronic money functions for each mobile terminal device.

A twelfth technical means of the present invention is the information storage medium of the ninth technical means,
wherein the controlling means connects an external antenna to transmit and receive electronic money information when the determining means determines to be executable.

A thirteenth technical means of the present invention is a mobile terminal device that can be detachably attached with an information storage medium having an electronic money function and in which the electronic money function is made executable by attaching the information storage medium to the mobile terminal device, wherein the information storage medium comprising a determining means that determines whether the electronic money function is executable based on specific information of the mobile terminal device attached with the information storage medium; and a controlling means that makes the electronic money function executable or not executable based on the result of the determining means.

A fourteenth technical means of the present invention is the mobile terminal device of the thirteenth technical means,
wherein the determining means authenticates whether specific information of the mobile terminal device is registered in a registering means included in the information storage medium and, when the authentication is successfully completed, determines that the electronic money function is executable.

A fifteenth technical means of the present invention is the mobile terminal device of the fourteenth technical means,
wherein the determining means executes authentication for each of a plurality of electronic money functions included in the information storage medium and determines electronic money functions for which the authentication has been successfully completed to be executable, and the controlling means executes the electronic money functions that have been determined to be executable by the determining means.

A sixteenth technical means of the present invention is the mobile terminal device of the thirteenth technical means, comprising an antenna to transmit and receive electronic money information externally, wherein the controlling means connects the information storage medium and the antenna when the determining means determines to be executable.

A seventeenth technical means of the present invention is the mobile terminal device of the thirteenth technical means, comprising a displaying means, wherein the controlling means displays a screen on the displaying means, that prompts registration of electronic money functions when the determining means determines to be not executable.

An eighteenth technical means of the present invention is the mobile terminal device of the thirteenth technical means, comprising a displaying means, wherein the controlling means displays a screen on the displaying means, that shows that the balance of the electronic money is zero when the determining means determines to be not executable.

### EFFECT OF THE INVENTION

According to the present invention, the mobile terminal device that can be attached detachably with the information storage medium having the electronic money function can execute authentication between the information storage medium and the mobile terminal device itself and can execute the electronic money function of the information storage medium when the authentication is successfully completed. Therefore, the electronic money function of the information storage medium can not be executed when a third party has pulled out the information storage medium from the mobile terminal device and tries to use the information storage medium with a mobile terminal device that is not registered in the information storage medium. Therefore, the security of the electronic money function that the information storage medium has can be secured.

### BRIEF DESCRIPTION OF THE DRAWINGS

[Fig. 1] Fig. 1 is a diagram of an appearance of a mobile terminal device according to an embodiment of the present invention.
[Fig. 2] Fig. 2 is a block diagram of an exemplary configuration of a mobile terminal device shown in Fig. 1.
[Fig. 3] Fig. 3 is a block diagram of an exemplary configuration of an information storage medium shown in Fig. 1.
[Fig. 4] Fig. 4 is a diagram of an example of authenticating data registered in the information storage medium.
[Fig. 5] Fig. 5 is a flow diagram for explaining an operational example of an electronic money system consisting of the mobile terminal device and the information storage medium that are applied with the present invention.
[Fig. 6] Fig. 6 is a flow diagram for explaining an example of an additional registering process of an available telephone number in the electronic money system of the present invention.

### EXPLANATIONS OF REFERENCE NUMERALS

10···mobile terminal device, 11, 23···antenna, 12···first wireless unit, 13···communication controlling unit, 14···sound controlling unit, 15···microphone, 16···speaker, 17, 33··· nonvolatile memory, 18···volatile memory, 19···operating unit, 20···display controlling unit, 21···displaying unit, 22···card attaching unit, 24···second wireless unit, 25···main controlling unit, 30···information storage medium (electronic money card), 31···interface, 32···electronic money controlling unit.

### PREFERRED EMBODIMENTS OF THE INVENTION

### (First Embodiment)

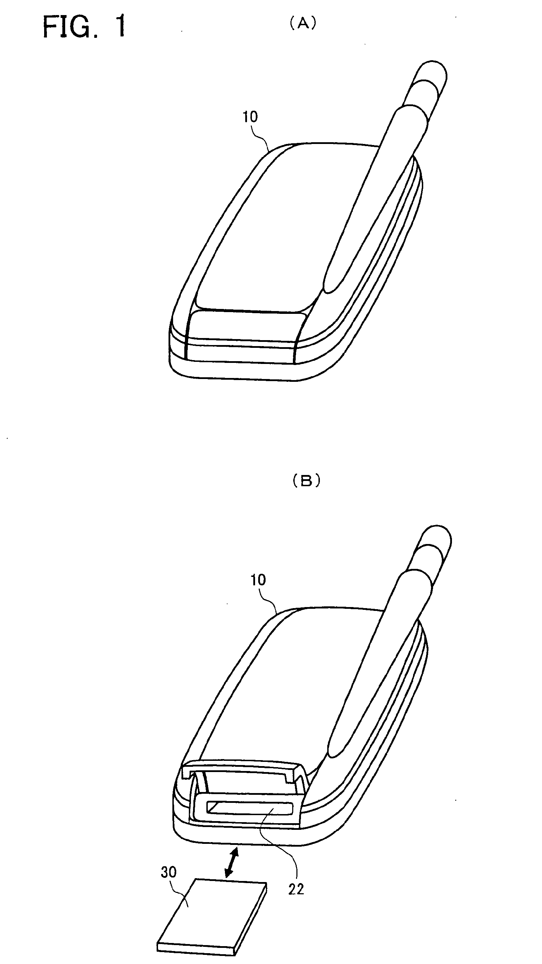

Fig. 1 is a diagram of an appearance of a mobile terminal device according to an embodiment of the present invention. In Fig. 1, "10" denotes the mobile terminal device. Though a mobile-phone is shown as the mobile terminal device 10 as a typical example in the example, the mobile terminal device 10 is not limited to the mobile-phone and may be a mobile terminal device such as, for example, a PDA (Personal Digital Assistant), a laptop computer. The mobile terminal device 10 of the example has a foldable configuration and the state where the mobile terminal device 10 is closed by folding the mobile terminal device 10 is shown in Fig. 1(A). The mobile terminal device 10 has a card attaching unit 22 that is an interface to attach detachably thereto an information storage medium 30 such as a memory card. The above state is shown in Fig. 1(B).

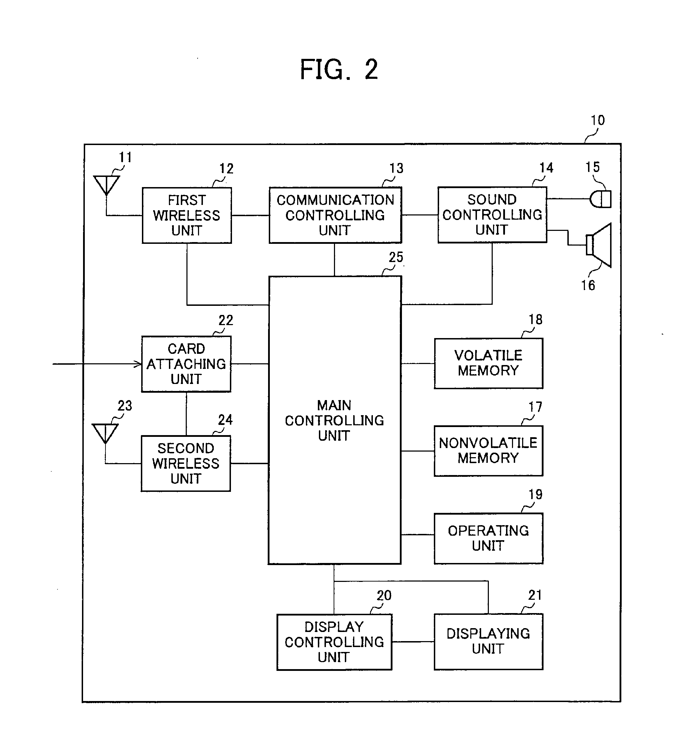

Fig. 2 is a block diagram of an exemplary configuration of the mobile terminal device 10 shown in Fig. 1. The mobile terminal device 10 includes an antenna 11, a first wireless unit 12, a communication controlling unit 13, a sound controlling unit 14, a microphone 15, a speaker 16, a nonvolatile memory 17, a volatile memory 18, an operating unit 19, a display controlling unit 20, a displaying unit 21, a card attaching unit 22, an antenna 23, a second wireless unit 24, and a main controlling unit 25.

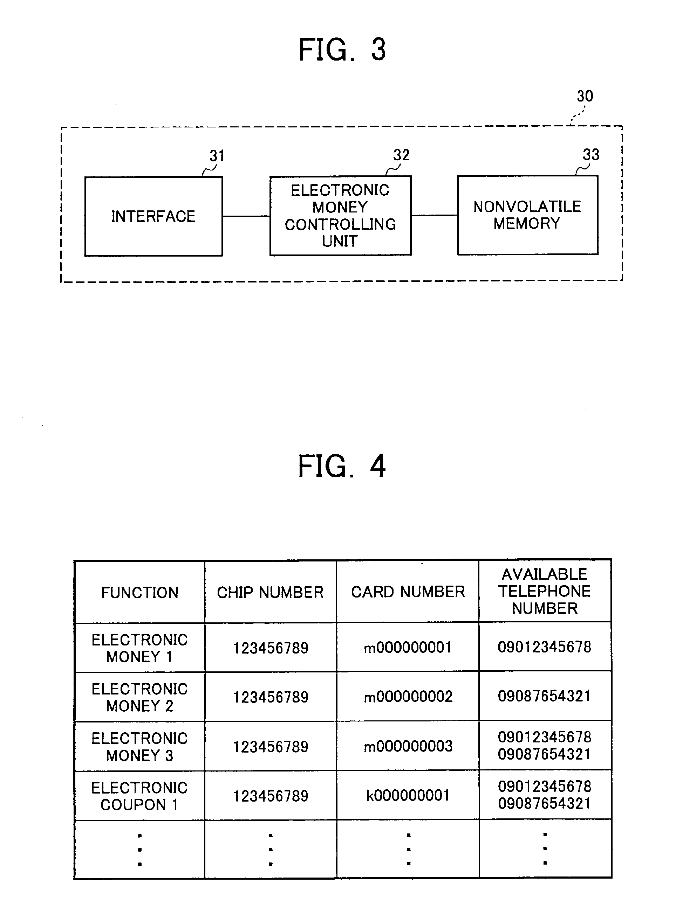

Fig. 3 is a block diagram of an exemplary configuration of the information storage medium 30 shown in Fig. 1. The information storage medium 30 is, for example, a memory card that is connectable to the mobile terminal device 10 and incorporates a non-contact IC chip having an electronic money function. The information storage medium 30 incorporating the non-contact IC chip includes an interface 31, an electronic money controlling unit 32, and a nonvolatile memory 33. The interface 31 is a means to connect to the mobile terminal device 10 and, when the information storage medium 30 is attached to the mobile terminal device 10, communication is enabled through the interface 31. The electronic money controlling unit 32 is a means to control the electronic money function executed by connecting the unit 32 to the mobile terminal device 10.

The nonvolatile memory 33 is configured by an area that stores available electronic money information (the amount), an area that stores a controlling program to control the electronic money function, an area that stores a specific electronic money number consisting of a predetermined number of digits, a storing area that registers at least one mobile terminal device, etc. The above "electronic money information" represents a monetary value as electronic data. According to the present invention, accesses to electronic money information are permitted only for a mobile terminal device registered in the nonvolatile memory 33.

In Fig. 2, the antenna 11 transmits and receives an electromagnetic wave to communicate by wireless with external apparatuses such as an electronic money administering server not shown that administers the electronic money information for each mobile terminal device. The first wireless unit 12 demodulates and decodes electromagnetic waves received by the antenna 11 and modulates and encodes electromagnetic waves to transmit from the antenna 11. The communication controlling unit 13 controls the first wireless unit 12. The sound controlling unit 14 is a means to control the sound of a call and is connected to the microphone 15 and the speaker 16.

The nonvolatile memory 17 stores a controlling program, etc., to control the mobile terminal device 10 and the controlling program is read and transferred by the main controlling unit 25 to the volatile memory 18 that is an working area, and is executed. The displaying unit 21 includes an LCD that displays various pieces of information and is driven and controlled by the display controlling unit 20. The operating unit 19 includes a plurality of numeral keys and operating keys and is used to input amounts of the electronic money information transmitted and received between the mobile terminal devices when person-to-person transactions are executed. The main controlling unit 25 includes a CPU and controls processes of each unit included in the mobile terminal device 10 (the first wireless unit 12, the communication controlling unit 13, the operating unit 19, the display controlling unit 20, the displaying unit 21, the card attaching unit 22, and the second wireless unit 24).

The card attaching unit 22 is an interfacing means to attach detachably the information storage medium 30. An antenna 23 is an antenna to transmit and receive the electronic money information to/from an external reader/writer and is connected to the information storage medium 30 through the second wireless unit 24. The second wireless unit 24 communicates with an external reader/writer by connecting the information storage medium 30 to the antenna 23, and transmits and receives the electronic money information between the reader/writer and the information storage medium 30 through wireless.

Though the antenna 23 (and the second wireless unit 24) are provided on the mobile terminal device 10 side in Fig. 2, the antenna 23 (and the second wireless unit 24) may be provided on the information storage medium 30 side.

The second wireless unit 24 is a means to transmit or receive the electronic money information with a reader/writer to read and write the electronic money information through the antenna 23. The second wireless unit 24 may be a means to transmit and receive the information by bringing the mobile terminal device 10 and the reader/writer close to each other. For example, in the case where RFID (Radio Frequency Identification) is used, when the mobile terminal device enters a communicable area where the antenna 23 can catch an induced magnetic flux radiated from the reader/writer, a wireless communicable state is established. Another embodiment of the second wireless unit 24 may be applied with, for example, Bluetooth (a registered trademark) or an infrared communication.

Fig. 4 is a diagram of an example of authenticating data registered in the information storage medium 30. The authenticating data includes pieces of information such as IC chip numbers, card numbers that are the electronic money numbers, specific information of the mobile terminal device (in this example, available telephone numbers) for each electronic money function (the electronic money 1, 2, 3, ..., the electronic coupon 1, ...). This authenticating data is registered in the information storage medium 30. The above electronic money functions (the electronic money 1, 2, 3) are functions that execute various settings to utilize the electronic money such as, for example, a function of setting the upper limit of the available amount and available electronic money functions can be assigned to each mobile terminal device. In the example, each function of the electronic money 1 and 3 and the electronic coupon 1 is set to be available in the mobile terminal device having a telephone number "09012345678" that is available therefor. The electronic coupon 1 is a function of storing available points in a home appliances mass merchandiser markets, etc.

The specific information of the mobile terminal device is not limited to the telephone number that is available therefor and may be any information specific to the mobile terminal device, and may be, for example, an electronic mail address, a manufacture serial number retained by the mobile terminal device, an IP address, a MAC address, a Bluetooth (a registered trademark) ID, biometrical information, a number on a SIM or a USIM inserted into the mobile terminal device, and a number or a secret key retained in a confidentiality apparatus (so-called "dongle") connected to the mobile terminal device. In this manner, the information storage medium 30 may have a plurality of electronic money functions and executable electronic money functions may be set in each mobile terminal device registered in the information storage medium 30.

In the embodiment, description will be given for the case where the information storage medium 30 executes an authenticating process of the mobile terminal device. In Figs. 2 and 3, it is assumed that, in the mobile terminal device 10, the information storage medium 30 is attached detachably to the card attaching unit 22. The information storage unit 30 includes the nonvolatile memory 33 that registers at least one mobile terminal device, the interface 31 to connect to the mobile terminal device 10, and the electronic money controlling unit 32. The electronic money controlling unit 32 is adapted to determine whether the electronic money functions are executable based on the specific information obtained from the mobile terminal device 10 attached with the information storage medium 30 and to make the electronic money functions of the information storage medium 30 executable or not executable based on the judgment result. More specifically, the electronic money controlling unit 32 includes a means of authenticating whether the mobile terminal device 10 connected to the interface 31 is the mobile terminal device registered in the nonvolatile memory 33 and a means of permitting the mobile terminal device 10 to make an access to the electronic money information when the authentication has been successfully completed.

As a result of the authenticating process, the information storage medium 30 notifies the mobile terminal device 10 of permission of the access to the electronic money information or non-permission of the access to the electronic money information.

The information storage medium 30 has a means of permitting a connection of an external antenna (the antenna 23) to transmit and receive the electronic money information when the information storage medium 30 permits the mobile terminal device 10 to make the access to the electronic money information. After being permitted by the information storage medium 30 (hereinafter, often "electronic money card 30") to connect, the mobile terminal device 10 can connect the antenna 23 to the electronic money card 30. The second wireless unit 24 connects the antenna 23 and the electronic money card 30.

That is, mobile terminal device 10 has the antenna 23 to transmit and receive the electronic money information to/from an external reader/writer and, when the mobile terminal device 10 receives from the information storage medium 30 the notice of permission of the access to the electronic money information, connects the information storage medium 30 and the antenna 23. In the case where the mobile terminal device 10 transmits and receives the electronic money information through a network, etc., when the mobile terminal device 10 receives from the information storage medium 30 a notice of permission of an access to the electronic money information, the mobile terminal device 10 controls the first wireless unit 12 such that the unit 12 can transmit and receive the electronic money information to/from an external server apparatus, etc.

When the mobile terminal device 10 receives from the information storage medium 30 the notice of non-permission of the access to the electronic money information, the mobile terminal device 10 executes an error display on the displaying unit 21 and, thereby, notifies a user that the electronic money function is not available. At this time, the mobile terminal device 10 may enable a registration screen of the electronic money function that the information storage medium 30 has, to be displayed on the displaying unit 21 and, when the mobile terminal device 10 receives from the information storage medium 30 a notice of non-permission of the access to the electronic money information, the mobile terminal device 10 may display the registration screen of the electronic money function. By configuring as above, a new registration of an electronic money function can easily be executed. The mobile terminal device 10 may enable the balance of the electronic money information to be displayed on the displaying unit 21 and, when the mobile terminal device 10 receives from the information storage medium 30 the notice of the non-permission of the access to the electronic money information, may display the balance of the electronic money information as zero. By configuring as above, when an information storage medium is attached to a mobile terminal device of a third party who is not registered in advance, the mobile terminal device 10 can make the third party think that no balance is present and, thereby, unauthorized acts can be restrained.

Otherwise, unauthorized use may be determined when authentication failure notice is received, and the unauthorized use may be notified by automatically transmitting electronic mail to an electronic mail address set in advance. In this case, the notification may be executed by the above electronic mail that is caused to include the specific information of a mobile terminal device (the telephone number, the manufacture serial number, the number on a SIM or a USIM, location information by GPS or a cell, etc.) that has made the unauthorized use of an information storage medium (an electronic money card). The transmission of the above mail may be adapted to be processed in the background not to be noticed by the party that has tried to make the unauthorized use. Otherwise, unauthorized use may be determined when authentication failure notice is received, and electronic value information stored in the information storage medium (the electronic money card) may be transmitted to a server set in advance to back up through the communicating function of the mobile terminal device.

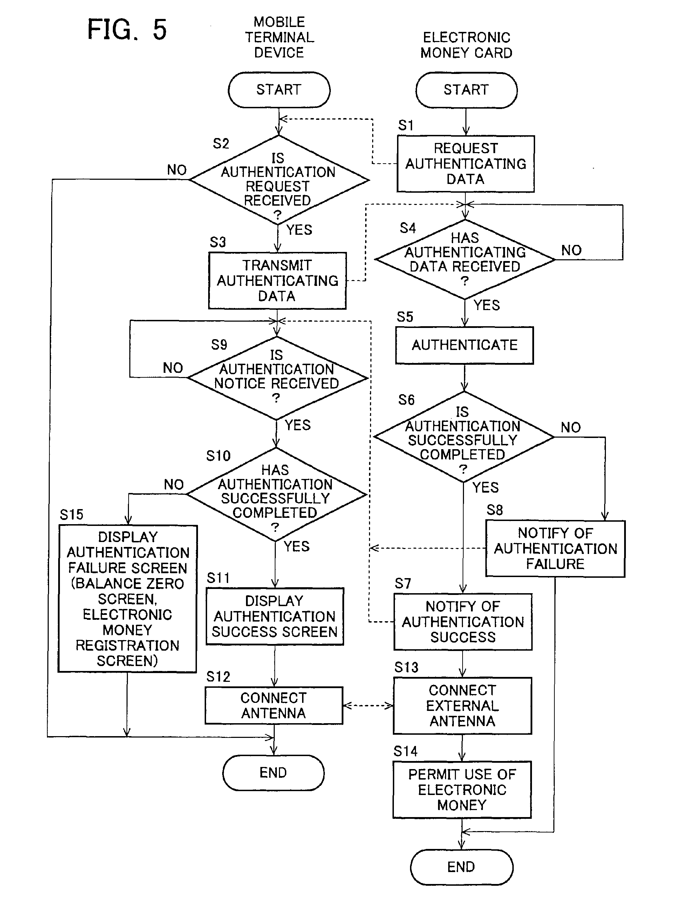

Fig. 5 is a flow diagram for explaining an operational example of an electronic money system consisting of the mobile terminal device 10 and the information storage medium 30 that are applied with the present invention. In this example, description will be given assuming that the information storage medium 30 is the electronic money card 30 and the electronic money card 30 is attached to the mobile terminal device 10. The electronic money card 30 requests authenticating data to the mobile terminal device 10 (step S1) and the mobile terminal device 10 determines whether an authentication request is received from the electronic money card 30 (step S2). When the authentication request is received (the case of YES), the mobile terminal device 10 transmits the authentication data to the information storage medium 30 (step S3). At the above step S2, when no authentication request is received (the case of NO), the procedure is ended without executing any further process.

The electronic money card 30 determines whether the authenticating data has been received from the mobile terminal device 10 (step S4) and, when the authenticating data has been received (the case of YES), executes an authenticating process (step S5). At the above step S4, when no authenticating data is received (the case of NO), the process at step S4 is repeated.

The electronic money card 30 determines whether the authentication is successful (step S6) and, when the authentication is successful (the case of YES), transmits an authentication success notice to the mobile terminal device 10 (step S7). When the authentication fails at step S6 (the case of NO), the card 30 transmits an authentication failure notice to the mobile terminal device 10 (step S8).

The mobile terminal device 10 determines whether an authentication notice has been received from the electronic money card 30 (step S9) and, when the authentication notices has been received (the case of YES), determines whether the authentication notice is the authentication success notice (step S10). When no authentication notice has been received at the above step S9, (the case of NO), the mobile terminal device 10 repeats step S9.

When the notice from the electronic money card 30 is the authentication success notice at above step S10 (the case of YES), the mobile terminal device 10 displays an authentication success screen on the displaying unit 21 (step S11) and connects the antenna 23 and the electronic money card 30 (steps S12 and S13) and the electronic money card 30 permits the mobile terminal device 10 to use the electronic money (step S14). When the notice from the electronic money card 30 is the authentication failure notice at above step S10 (the case of NO), the mobile terminal device 10 displays an authentication failure screen (for example, a screen showing a balance of zero, an electronic money registration screen, etc.) on the displaying unit 21 (step S15).

At the above step S13, the electronic money card 30 has a means of permitting a connection of an external antenna (the antenna 23) to transmit and receive the electronic money information when the card 30 permits the mobile terminal device 10 to make the access to the electronic money information. After being permitted by the electronic money card 30 to connect, the mobile terminal device 10 connects the antenna 23 to the electronic money card 30.

In Fig. 5, after the authentication has been successfully completed, the access to the electronic money information has been permitted, and the antenna has been connected, the mobile terminal device 10 operates as an ordinary mobile terminal device with an electronic money function. When the electronic money card 30 has a plurality of electronic money functions (for example, an available money amount upper limit setting function, etc.), the electronic money card 30 executes authentication for each of the electronic money functions, permits the mobile terminal device 10 to use electronic money function for which the authentication thereof has been successfully completed, does not permit the mobile terminal device to use electronic money functions for which the authentication thereof has failed. The electronic money card 30 responds to a signal from the reader/writer side as to the electronic money functions that have been permitted to be used, and does not respond to a signal from the reader/writer side as to the electronic money functions that have not been permitted to be used even when these functions are registered in the electronic money card 30. This also applies to, for example, a mobile terminal device having a reader/writer function and a mobile terminal device that communicates through a network.

Though the control of an access to the electronic money and connection of the antenna is executed depending on whether the authentication is successfully completed in the above example, the control is not limited to this. A configuration to determine whether the electronic money function is executable based on the specific information obtained from a mobile terminal device attached to the information storage medium and the electronic money function is made executable or not executable based on the result of the judgment, can be a configuration according to which a card number may be encrypted using a specific code of a mobile terminal device in a corresponding relation to the card and, when the information storage medium is attached to the mobile terminal device, the card number may be decrypted using the specific code of the mobile terminal device to which information storage medium is attached. By configuring as this, when the information storage medium is connected to a mobile terminal device that is not in a corresponding relation thereto, the valid card number is not reproduced and, therefore, unauthorized use can be prevented. Additionally, by using a telephone number as a specific code of the mobile terminal device, even when a mobile-phone is changed using a SIM or a USIM, an effect can be exerted that the electronic money function can be made executable without executing any extra operation at the mobile-phone that has been changed to.

### (Second Embodiment)

Description will be given for another embodiment referring to Figs. 2 and 3. In the embodiment, the mobile terminal device 10 executes an authenticating process of the mobile terminal device. The authenticating process is basically same as that in the information storage medium 30 shown in the first embodiment except that the authenticating process of the mobile terminal device is executed by the mobile terminal device 10.

In the embodiment, the information storage medium 30 has at least one mobile terminal device registered in the nonvolatile memory 33. The mobile terminal device 10 is configured to determine whether the electronic money function is executable based on the specific information of the mobile terminal device 10 and to make the electronic money function of the information storage medium executable or not executable based on the result of the judgment. More specifically, the mobile terminal device 10 includes a means of authenticating whether the mobile terminal device 10 is the mobile terminal device registered in the information storage medium 30 and a means of making an access to the electronic money information stored by the information storage medium 30 when the authentication has been successfully completed. These means are realized by the main controlling unit 25. When the authentication for the information storage medium 30 has been successfully completed, the mobile terminal device 10 connects the information storage medium 30 and the antenna 23 and functions as a mobile terminal device having the electronic money function.

The mobile terminal device 10 may authenticate for each of the plurality of electronic money functions retained by the information storage medium 30 and may execute the electronic money functions for which the authentication thereof has been successfully completed. As shown in Fig. 4, the authenticating data of the mobile terminal device includes pieces of information such as IC chip numbers, card numbers that are the electronic money numbers, specific information of the mobile terminal device (available telephone numbers) for each electronic money function (the electronic money 1, 2, 3, ..., the electronic coupon 1, ...) and this authenticating data is registered in the information storage medium 30. When the mobile terminal device 10 in the embodiment executes the above authenticating process, the mobile terminal device 10 refers to the authenticating data registered in the information storage medium 30 and determines whether the specific information of the mobile terminal device 10 itself is registered.

The available money amount upper limit setting function that is one of the above electronic money functions may be set for each mobile terminal device registered for each information storage medium or may be set for each mobile terminal device registered for each electronic money function. For example, a manner of use is possible, that is, Edy (a registered trademark) and Suica (a registered trademark) are registered in an information storage medium as electronic money functions in the name of a parent; the Edy available amount upper limit is set to be unlimited and the Suica available amount upper limit is set to be unlimited in a mobile terminal device used by the parent; the Edy available amount upper limit is set to be 1,000 yen and the Suica available amount upper limit is set to be 2,000 yen in a mobile terminal device used by a child A; and the Edy available amount upper limit is set to be 500 yen and the Suica available amount upper limit is set to be 1,000 yen in a mobile terminal device used by a child B.

When the authentication for the information storage medium 30 has been failed, the mobile terminal device 10 executes an error display on the displaying unit 21 and, thereby, notifies the user to the effect that the electronic money function is not available. At this time, similarly to the first embodiment, the mobile terminal device 10 may display a registration screen of the electronic money function on the displaying unit 21 or may display the balance of the electronic money information to be zero.

According to the present invention, in a mobile terminal device attached detachably with an information storage medium having electronic money functions, authentication is executed between the information storage medium and the mobile terminal device and, only when the authentication has been successfully completed, the electronic money functions of the information storage medium can be executed. Therefore, the electronic money functions of the information storage medium can not be executed when a third party has pulled out the information storage medium from the mobile terminal device and tries to use the information storage medium with a mobile terminal device that is not registered in the information storage medium. Therefore, the security of the electronic money functions that the information storage medium has can be secured.

### (Third Embodiment)

An embodiment described below is adapted to be able to additionally register or delete mobile terminal devices that can use the information storage medium 30 to/from the mobile terminal device 10 registered in the information storage medium 30. In other words, mobile terminal devices other than the mobile terminal devices registered in the information storage medium 30 are disabled to additionally register or delete mobile terminal devices.

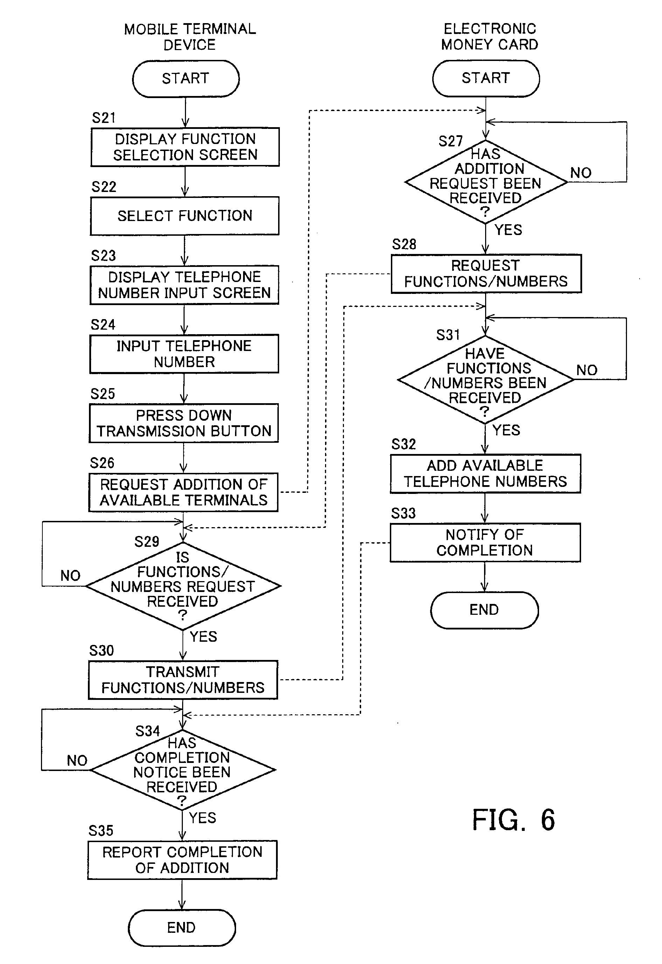

Fig. 6 is a flow diagram for explaining an example of an additional registering process of an available telephone number in the electronic money system of the present invention. In this example, description will be given assuming that the information storage medium 30 is the electronic money card 30 and the electronic money card 30 is attached to the mobile terminal device 10. The mobile terminal device 10 causes the displaying unit 21 to display a function selection screen (step S21). A user selects a function (herein, a telephone number additionally registering function) on the function selection screen (step S22), causes the telephone number input screen to be displayed (step S23), and inputs his/her own telephone number (step S24). The user presses down a transmission button (step S25) and executes an available terminal addition request to the electronic money card 30 (step S26).

In this case, the contents of the registration may be adapted to be able to be checked by selecting a list of registered items from the function selection screen. The mobile terminal device registered for each electronic money function in the above contents of the registration, the access authorities for each mobile terminal device (the payment authority and the charging authority of the electronic money function, the authority to add and the authority to delete mobile terminal devices that can use the information storage medium, etc.) and the available amount upper limit, etc., for each mobile terminal device may be adapted to be able to be checked. The number of mobile terminal devices that can be registered for each electronic money function is one or more and a plurality of those may be registered.

The mobile terminal device that can be added may be adapted to be limited (being determined based on telephone numbers thereof) to the mobile terminal devices registered in a database (such as a telephone directory) installed in a mobile terminal device that executes an adding operation.

The authority to add or the authority to delete mobile terminal devices that can use the information storage medium may be adapted to be transferred to another mobile terminal device. More specifically, contemplated methods can be, for example, a method of transferring the authorities to a mobile terminal device B by rewriting the contents of the registration of the information storage medium by a mobile terminal device A and a method of transferring the authorities from the mobile terminal device A to the mobile terminal device B through a server for the transfer operation.

The electronic money card 30 determines whether an addition request has been received from the mobile terminal device 10 (step S27) and, when the addition request has been received (the case of YES), transmits a request for the function/telephone number of the electronic money to be additionally registered to the mobile terminal device (step S28). When no addition request has been received at the above step S27 (the case of NO), step S27 is repeated.

The mobile terminal device 10 determines whether the function/number request has been received from the electronic money card 30 (step S29) and, when the function/number request has been received (the case of YES), transmits functions/numbers to be additionally registered to the electronic money card 30 (step S30). When no function/number request has been received at the above step S29 (the case of NO), step S29 is repeated.

The electronic money card 30 determines whether the functions/numbers have been received from the mobile terminal device 10 (step S31); when the functions/numbers have been received (the case of YES), adds the received available telephone numbers (step S32) ; and transmits a completion notice to the mobile terminal device 10 (step S33). When no functions/numbers have been received at the above step S31 (the case of NO), step S31 is repeated.

The mobile terminal device 10 determines whether the completion notice has been received from the electronic money card 30 (step S34) and, when the completion of addition notice has been received (the case of YES), reports the completion notice from the displaying unit 21 (step S35). When no completion notice has been received at the above step S34 (the case of NO), step S34 is repeated.

Though the above flow has been described taking the operational example of adding the available telephone numbers, for deletion of the available telephone numbers, only "add" or "addition" in the above flow has to be rewritten to "delete" or "deletion" and the basic operation flow is same as above. However, as to contemplated timing at which deleted functions/numbers are made unavailable, the functions/numbers may be made unavailable immediately after the deletion or the functions/numbers may be left without any further process executed and may be made unavailable when the electronic money card is attached again to the mobile terminal device after the card has been pulled out of the mobile terminal device, etc.

According to the present invention, a mobile terminal device other than the mobile terminal device registered in an information storage medium can not additionally register or delete any mobile terminal device. Therefore, a mobile terminal device can be prevented from being additionally registered into an information storage medium or being deleted from an information storage medium by a third party other than registered users.

Each Embodiment has been described focusing the each function of an electronic money system, an information storage medium, and a mobile terminal device of the present invention. However, as described also as a method of executing steps in the system, the medium, and the apparatus (hereinafter, represented by "System"), the present invention may take a form of a method of authenticating a mobile terminal device that can use an information storage medium. Similarly to the System having the functions, possible forms can be a form of a program to cause a computer to function as an electronic money system of the present invention and a form of a recording medium that stores the program.

Description will be given for an embodiment of a recording medium that stores the program and data to realize the electronic money function of the present invention. A CD, a DVD, a HD (Hard Disk), a flush memory, a memory card, a memory stick and various types of ROMs and RAMs can be specifically assumed as the recording medium. A computer may be caused to execute the above functions as the System of each embodiment of the present invention on these recording medium and the program to realize the functions of the electronic money may be recorded and distributed and, thereby, the realization of the functions can be facilitated. A recording medium as above may be attached to a mobile terminal device and the program may be read by the mobile terminal device, or the recording medium included in the mobile terminal device may be caused to store the program and the program may be read when necessary. Thereby, the functions of the electronic money according to the present invention can be executed.

## Claims

1. An electronic money system that comprises an information storage medium having an electronic money function and a mobile terminal device attached detachably with the information storage medium, and in which the electronic money function is made executable by attaching the information storage medium to the mobile terminal device, wherein the information storage medium or the mobile terminal device comprising:
a determining means that determines whether the electronic money function is executable based on specific information obtained from the mobile terminal device attached with the information storage medium; and
a controlling means that makes the electronic money function executable or not executable based on the result of the determining means.

2. The electronic money system as defined in claim 1, wherein
the information storage medium has a registering means that can register at least one mobile terminal device, and
the determining means authenticates whether the mobile terminal device attached with the information storage medium is a mobile terminal device registered in the registering means based on the specific information and, when the authentication is successfully completed, determines the electronic money function to be executable.

3. The electronic money system as defined in claim 2, wherein
the information storage medium has a plurality of electronic money functions, and
the registering means can set therein with executable electronic money functions for each mobile terminal device.

4. The electronic money system as defined in claim 2, wherein
the registering means additionally registers or enables to be deleted a mobile terminal device that enables electronic money functions to be executed when the determining means determines to be executable.

5. The electronic money system as defined in claim 1, wherein
the controlling means permits the mobile terminal device to make an access to electronic money information when the determining means determines to be executable.

6. The electronic money system as defined in claim 1, wherein
the mobile terminal device has an antenna to transmit and receive electronic money information externally, and
the controlling means connects the information storage medium and the antenna when the determining means determines to be executable.

7. The electronic money system as defined in claim 1, wherein
the mobile terminal device has a displaying means, and
the controlling means displays a screen on the displaying means, that prompts registration of electronic money functions when the determining means determines to be not executable.

8. The electronic money system as defined in claim 1, wherein
the mobile terminal device has a displaying means, and
the controlling means displays a screen on the displaying means, that shows that the balance of the electronic money is zero when the determining means determines to be not executable.

9. An information storage medium that has an electronic money function and that enables the electronic money function by being attached to a mobile terminal device, wherein the information storage medium comprising:
a determining means that determines whether the electronic money function is executable based on specific information obtained from the mobile terminal device attached with the information storage medium; and
a controlling means that enables or disables the electronic money function to be executed based on the result of the determining means.

10. The information storage medium as defined in claim 9, comprising:
a registering means that can register at least one mobile terminal device, wherein
the determining means authenticates whether the mobile terminal device attached with the information storage medium is a mobile terminal device registered in the registering means based on the specific information and, when the authentication is successfully completed, determines the electronic money function to be executable.

11. The information storage medium as defined in claim 10, wherein
the information storage medium has a plurality of electronic money functions , and
the registering means can set therein executable electronic money functions for each mobile terminal device.

12. The information storage medium as defined in claim 9, wherein
the controlling means connects an external antenna to transmit and receive electronic money information when the determining means determines to be executable.

13. A mobile terminal device that can be detachably attached with an information storage medium having an electronic money function and in which the electronic money function is made executable by attaching the information storage medium to the mobile terminal device, wherein the information storage medium comprising:
a determining means that determines whether the electronic money function is executable based on specific information of the mobile terminal device attached with the information storage medium; and
a controlling means that makes the electronic money function executable or not executable based on the result of the determining means.

14. The mobile terminal device as defined in claim 13, wherein
the determining means authenticates whether specific information of the mobile terminal device is registered in a registering means included in the information storage medium and, when the authentication is successfully completed, determines that the electronic money function is executable.

15. The mobile terminal device as defined in claim 14, wherein
the determining means executes authentication for each of a plurality of electronic money functions included in the information storage medium and determines electronic money functions for which the authentication has been successfully completed to be executable, and
the controlling means executes the electronic money functions that have been determined to be executable by the determining means.

16. The mobile terminal device as defined in claim 13, comprising:
an antenna to transmit and receive electronic money information externally, wherein
the controlling means connects the information storage medium and the antenna when the determining means determines to be executable.

17. The mobile terminal device as defined in claim 13, comprising:
a displaying means, wherein
the controlling means displays a screen on the displaying means, that prompts registration of electronic money functions when the determining means determines to be not executable.

18. The mobile terminal device as defined in claim 13, comprising:
a displaying means, wherein
the controlling means displays a screen on the displaying means, that shows that the balance of the electronic money is zero when the determining means determines to be not executable.
